# EUROPÄISCHE PATENTANMELDUNG

(11) **EP 1 076 190 A2**
(43) Veröffentlichungstag der Anmeldung: **14.02.2001**
(21) Anmeldenummer: 00114366.8
(22) Anmeldetag: 05.07.2000
(51) Int. Cl.: F16F 9/48

(54) **Hydraulischer Stossdämpfer**

(30) Priorität: 12.08.1999 DE 19938212
(71) Anmelder: Schunk GmbH & Co. KG Fabrik für Spann- und Greifwerkzeuge, 74348 Lauffen (DE)
(72) Erfinder: Schneider, Micheal, 70806 Kornwestheim (DE); Winkler, Ralf, 74226 Nordheim (DE)
(74) Vertreter: Paul, Dieter-Alfred, Dipl.-Ing.

(57) **Zusammenfassung**

Dargestellt und beschrieben wird ein hydraulischer Stoßdämpfer mit einem Gehäuse (2), das einen mit Hydraulikmittel gefüllten Druckraum (3) bildet, und einem Kolben (4), der im Druckraum (3) verschiebbar geführt ist und über eine aus dem Gehäuse (2) ragende Kolbenstange (12) betätigbar ist und den Druckraum (3) axial in zwei Druckkammern (3a, 3b) unterteilt, wobei zwischen den Druckkammern (3a, 3b) ein Drosselkanal (10) ausgebildet ist, in den von der Gehäusebodenseite her eine Drosselnadel (11) mit einem in Richtung des Gehäusebodens (2a) zunehmenden Querschnitt hineinragt, welcher dadurch gekennzeichnet ist, daß zur Einstellung des Strömungsquerschnitts im Drosselkanal (10) die Außenkontur der Drosselnadel (11) veränderbar ist.

## Beschreibung

Die vorliegende Erfindung betrifft einen hydraulischen Stoßdämpfer mit einem Gehäuse, das einen mit Hydraulikmittel gefüllten Druckraum bildet, und einem Kolben, der im Druckraum verschiebbar geführt und durch eine aus dem Gehäuse ragende Kolbenstange betätigbar ist und den Druckraum axial in zwei Druckkammern unterteilt, wobei zwischen den Druckkammern ein Drosselkanal ausgebildet ist, in den von der Gehäusebodenseite her eine Drosselnadel mit einem in Richtung des Gehäusebodens zunehmenden Querschnitt hineinragt.

Hydraulische Stoßdämpfer dieser Art sind bekannt und werden im Maschinenbaubereich sowie in der Handhabungs- und Automationstechnik eingesetzt, um sich bewegende Massen abzubremsen, wobei es wesentlich darauf ankommt, daß das Abbremsen möglichst gleichförmig erfolgt.

Um die Abbremsung zu bewirken, wird bei den bekannten hydraulischen Stoßdämpfern der Bewegung eines Kolbens, dessen Kolbenstange aus dem Gehäuse des Stoßdämpfers herausragt und mit der abzubremsenden Masse gekoppelt ist, ein konstanter Widerstand entgegengesetzt, der durch die Federkraft einer Schraubenfeder erzeugt wird. Dem Widerstand dieser Feder überlagert ist die Dämpfungswirkung der im Druckraum des Stoßdämpfers vorgesehenen Hydraulikflüssigkeit, die bei einer in das Gehäuse gerichteten Axialbewegung des Kolbens aus der kleiner werdenden Druckkammer durch den Drosselkanal in die größer werdende Druckkammer entweichen muß.

Aus der EP 0 436 461 A2 ist beispielsweise ein hydraulischer Stoßdämpfer der eingangs genannten Art bekannt, der einen mit Hydraulikmittel gefüllten, geschlossenen Druckraum aufweist, in dem ein Kolben verschiebbar angeordnet ist, der den Druckraum axial in zwei Druckkammern unterteilt. Um bei einer in das Gehäuse gerichteten Bewegung des Kolbens ein Ausweichen des Druckmittels aus der kleiner werdenden ersten Druckkammer in die größer werdende zweite Druckkammer zu gestatten, ist zwischen den beiden Druckkammern ein Drosselkanal ausgebildet, durch welchen das Öl aus der ersten Kammer gedrosselt in die zweite Kammer entweichen kann. Der Drosselkanal wird dabei von einer Buchse gebildet, in die von der Gehäusebodenseite her eine Drosselnadel mit einem sich zum Gehäuseboden hin vergrößernden Querschnitt eingreift. Der Strömungsquerschnitt des Drosselkanals wird dabei durch den Ringspalt zwischen der Drosselnadel und der Buchsenwandung bestimmt und verkleinert sich, wenn die Buchse mit dem Kolben in Richtung des Gehäusebodens gedrückt wird. Hierdurch wird erreicht, daß der Strömungswiderstand, den das Öl zu überwinden hat, zunimmt, je weiter der Kolben in das Gehäuse eingeschoben wird, d.h. es stellt sich ein progressives Dämpfungsverhalten ein.

Der bekannte hydraulische Stoßdämpfer hat sich in der Praxis durchaus bewährt, jedoch wird es zum Teil als nachteilig erachtet, daß das Dämpfungsverhalten nur mit Schwierigkeiten eingestellt werden kann, indem unterschiedliche Buchsen bzw. Drosselnadeln verwendet werden.

Aufgabe der Erfindung ist es daher, einen hydraulischen Stoßdämpfer der eingangs genannten Art so auszubilden, daß das Dämpfungsverhalten mit geringem Aufwand geändert werden kann.

Diese Aufgabe ist erfindungsgemäß dadurch gelöst, daß zur Einstellung des Strömungsquerschnitts im Drosselkanal die Außenkontur der Drosselnadel veränderbar ist. Erfindungsgemäß wird somit der Querschnitt des Drosselkanals, der zwischen der Drosselnadel und der Kanalwandung gebildet wird, durch Veränderung der Außenkontur der Drosselnadel vergrößert oder verkleinert, um auf diese weise die "Härte" des hydraulischen Stoßdämpfers einzustellen.

Gemäß einer Ausführungsform der Erfindung ist hierzu vorgesehen, daß die Drosselnadel als geschlossener Hohlkörper ausgebildet ist und in dem Innenraum der Drosselnadel unter Aufweitung der Drosselnadel ein Hydraulikdruck aufgebaut werden kann. Mit anderen Worten wird bei dieser Ausführungsform unter Anwendung aus der Dehnspanntechnik an sich bekannten Arbeitsweise der Querschnitt der Drosselnadel vergrößert, indem im Innenraum der Drosselnadel ein Hydraulikdruck aufgebaut wird. Zweckmäßigerweise ist dazu der mit einem Hydraulikmittel gefüllte Innenraum der Drosselnadel durch ein in die Drosselnadel eingeschraubtes kolbenartiges Stellorgan verschlossen und kann der Hydraulikdruck im Innenraum eingestellt werden, indem das Stellorgan unter Verkleinerung bzw. Vergrößerung des Innenraums in die Drosselnadel weiter eingeschraubt oder aus dieser herausgedreht wird.

Gemäß einer bevorzugten Ausführungsform sollte die Drosselnadel so ausgebildet sein, daß ihre Wandstärke vom kleineren zum größeren Durchmesser hin insbesondere proportional zunimmt. Hierdurch wird erreicht, daß sich die Ventilnadel am kleineren Durchmesser mehr aufweitet als am großen Durchmesser, d.h. der Schrägenwinkel der Drosselnadel kleiner wird.

Gemäß einer weiterer Ausführungsform ist ein Regelkreis vorgesehen, um den Druck im Innenraum der Drosselnadel in Abhängigkeit von einer Regelgröße zu verstellen.

Eine solche Regelung kann beispielsweise von Vorteil sein, wenn der Stoßdämpfer über einen langen Zeitraum eingesetzt wird, so daß sich durch die auftretende Erwärmung die Viskosität des Hydraulikmittels und damit auch die Dämpfung des Systems ändert. In diesem Fall kann der Querschnitt der Drosselnadel und damit der Strömungsquerschnitt der Drosselnadel in Abhängigkeit von der Temperatur des Hydraulikmittels, die beispielsweise über ein Thermoelement erfaßt werden kann, eingestellt werden. Alternativ oder zusätzlich besteht die Möglichkeit, den Innendruck der Drosselnadel in Abhängigkeit von der Geschwindigkeit des Kolbens einzustellen.

Gemäß einer alternativen Ausführungsform ist vorgesehen, daß die Drosselnadel an ihrer Außenfläche Ausnehmungen aufweist, die zur Drosselnadelspitze hin offen sind und sich in Längsrichtung der Drosselnadel erstrecken, und in die Ausnehmungen längliche Einsatzelemente eingesetzt sind, die an ihrem gehäusebodenseitigen Ende an der Drosselnadel fixiert und durch eine Stelleinrichtung zumindest im Bereich ihres freien Endes in den Ausnehmungen etwa radial bewegbar sind, um den Winkel der Einsatzelemente zur Drosselnadelachse und damit den Querschnitt der Drosselnadel zu verändern. In diesem Fall erfolgt die Einstellung des Drosselnadelquerschnitts somit nicht auf hydraulische, sondern auf mechanische Weise, indem der Schrägenwinkel der Einsatzelemente verändert wird.

Zur Verstellung der Einsatzelemente kann beispielsweise vorgesehen sein, daß die Drosselnadel eine axiale Durchgangsbohrung aufweist, die von einem Stellelement der Stelleinrichtung durchgriffen wird, welches in der Durchgangsbohrung axial gehalten ist, wobei das Stellelement und/oder die Einsatzelemente an ihrem drosselnadelspitzenseitigen Endbereich Auflaufschrägen aufweisen, um die Einsatzelemente bei einer Axialbewegung des Stellelements in einer Richtung nach außen zu drücken. Zweckmäßigerweise sollte die Anordnung dabei so getroffen sein, daß die Einsatzelemente elastisch verformt werden, wenn sie nach außen gedrückt werden, so daß sie durch die Rückstellkräfte automatisch in ihre Ausgangslage zurückgebracht werden, wenn das Stellelement in entgegengesetzter Richtung axial bewegt wird.

Das Stellelement kann beispielsweise in den Gehäuseboden eingeschraubt und dann durch eine Drehbewegung axial verstellt werden, wobei die Stellbewegungen entweder manuell oder durch einen Stellantrieb erfolgen können. Dieser Stellantrieb kann wie bei der zuvor erläuterten Ausführungsform ebenfalls mit einem Regelkreis gekoppelt sein, um den Drosselnadelquerschnitt in Abhängigkeit von einer Regelgröße einzustellen.

Hinsichtlich weiterer vorteilhafter Ausgestaltungen der Erfindung wird auf die Unteransprüche sowie auf die nachfolgende Beschreibung eines Ausführungsbeispiels unter Bezugnahme auf die beiliegende Zeichnung verwiesen. In der Zeichnung zeigt
- Figur 1: im Längsschnitt eine Ausführungsform eines erfindungsgemäßen hydraulischen Stoßdämpfers mit voll ausgefahrener Kolbenstange, bei welcher der Drosselnadelquerschnitt hydraulisch eingestellt werden kann;
- Figur 2: eine weitere Ausführungsform eines erfindungsgemäßen Stoßdämpfers mit voll ausgefahrener Kolbenstange im Längsschnitt, bei welcher der Drosselnadelquerschnitt mechanisch eingestellt werden kann und
- Figur 3: in perspektivischer Ansicht die Drosselnadel mit der dazugehörigen mechanischen Stelleinrichtung des in Figur 2 dargestellten Stoßdämpfers.

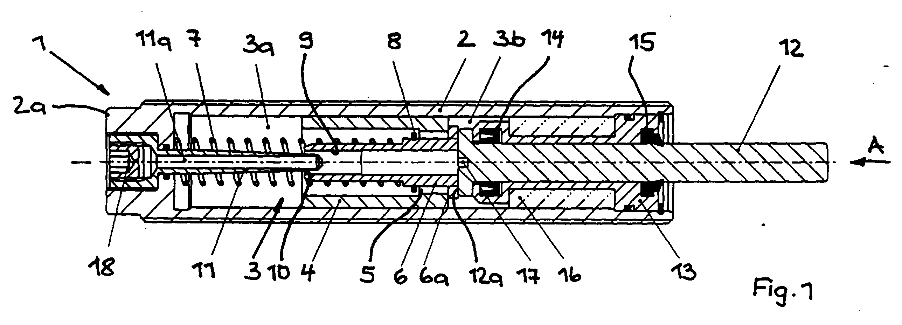

In der Figur 1 ist eine erste Ausführungsform eines hydraulischen Stoßdämpfers gemäß der vorliegenden Erfindung dargestellt. Zu dem Stoßdämpfer 1 gehören ein Gehäuse 2, das einen mit Öl gefüllten, geschlossenen Druckraum 3 bildet, und ein Kolben 4, der im Druckraum 3 verschiebbar angeordnet ist und diesen axial in zwei Druckkammern 3a, 3b - eine zwischen Kolben 4 und Gehäuseboden 2a gebildete erste Druckkammer 3a und auf der anderen Kolbenseite gelegene zweite Druckkammer 3b - unterteilt.

Der Kolben 4 ist als Hohlkörper ausgebildet, wobei er an seiner zum Gehäuseboden 2a weisenden Seite offen und an seinem vom Gehäuseboden 2a wegweisenden Seite geschlossen ausgebildet ist. In der den Kolben 4 stirnseitig verschließenden Wandung 4a sind Durchgangsbohrungen 5 vorgesehen, durch welche die beiden Druckkammern 3a, 3b miteinander in Verbindung stehen. Desweiteren ist in der Wandung 4a eine zentrale Durchgangsbohrung vorgesehen, in welcher ein Ventilelement 6 axial verschiebbar gehalten ist, das an seinem gehäusebodenfernen Ende einen Flansch 6a aufweist, der am Kolben 4 dichtend in Anlage gebracht werden kann und dabei die Durchgangsbohrungen 5 verschließt. Das Ventilelement 6 ist durch eine Schraubendruckfeder 7 am Gehäuseboden 2a abgestützt und trägt ein Mitnehmerelement 8, welches bei einer vom Gehäuseboden 2a weggerichteten Bewegung des Ventilelements 6 am Kolben 4 in Anlage kommt, um diesen mitzunehmen.

Das Ventilelement 6 weist eine axiale Mittelbohrung 9 auf, in die eine am Gehäuseboden 2a gehaltene Drosselnadel 11 unter Bildung eines kreisringförmigen Drosselkanals 10 eingreift, die einen sich vom Gehäuseboden 2a zur Spitze hin konisch verjüngenden Querschnitt besitzt. Die Drosselnadel 11 ist in den Gehäuseboden 2a eingeschraubt, wobei sie je nach Einschraubtiefe mehr oder weniger weit in den Druckraum 3 und damit in die Mittelbohrung 9 hineinragt.

Zur Betätigung des Kolbens 4 ist eine Kolbenstange 12 vorgesehen, die an ihrem kolbenseitigen Ende an dem Ventilelement 6 anliegt, wobei eine in der Stirnfläche 12a der Kolbenstange 12 vorgesehene Entspannungsnut 17 die Mittelbohrung 9 des Ventilelements 6 und somit die erste Druckkammer 3a mit der zweiten Druckkammer 3b verbindet, und mit ihrem kolbenfernen Ende aus dem Gehäuse 2 herausragt. Die Kolbenstange 12 ist in einer Führungsbuchse 13 verschiebbar gehalten, die das Gehäuse 2 nach Art eines Deckels verschließt, wobei der Ringspalt zwischen Kolbenstange 12 und Führungsbuchse 13 durch Dichtungselemente 14, 15 abgedichtet ist. Die Führungsbuchse 13 begrenzt die zweite Druckkammer 3b nach innen hin und trägt ein Absorberelement 16 für das Hydraulikmittel.

Erfindungsgemäß ist bei dieser Ausführungsform die Drosselnadel 11 als ein Hohlkörper ausgebildet, dessen Innenraum 11a mit einem Hydraulikmittel wie beispielsweise Öl gefüllt ist. Der Innenraum 11a der Drosselnadel 11 wird dabei von einem Stellorgan 18 verschlossen, das in die Drosselnadel 11 von der Gehäusebodenseite her eingeschraubt ist, so daß der Hydraulikdruck im Innenraum 11a verändert werden kann, indem das Stellorgan 18 unter Verkleinerung bzw. Vergrößerung des Innenraums 11a in die Drosselnadel 11 weiter eingeschraubt oder aus dieser herausgedreht wird. Eine Erhöhung des Innendrucks hat dabei die Wirkung, daß sich die Drosselnadel 11 hydraulisch aufweitet, so daß sich der zwischen der Drosselnadel 11 und der Wandung der Mittelbohrung 9 gebildete Drosselkanal 10 verkleinert. Wie in Figur 1 gut erkennbar ist, nimmt die Wandstärke der Drosselnadel 11 vom kleineren zum größeren Durchmesser hin proportional zu, so daß die Aufweitung an der Drosselnadelspitze größer ist als an ihrem gehäusebodenseitigen Basisende.

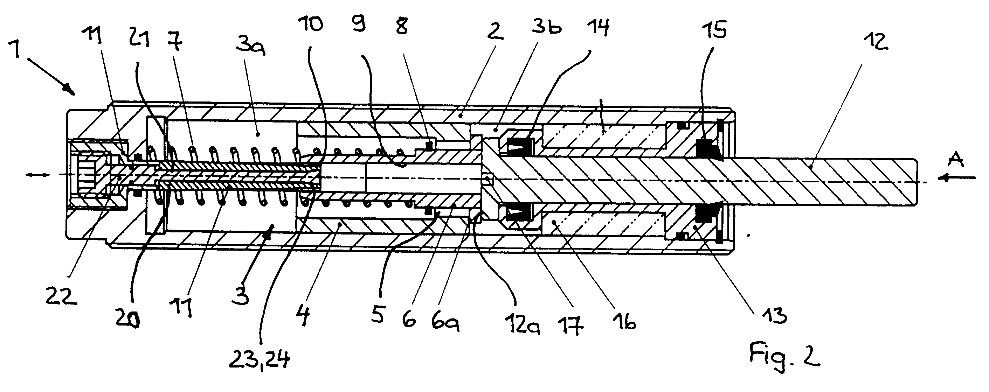

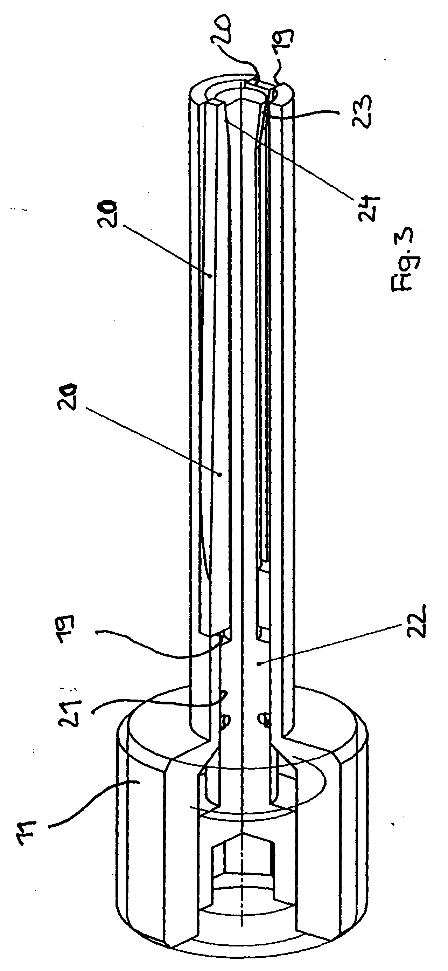

Der in Figur 2 dargestellt Stoßdämpfer 1 hat den gleichen Aufbau wie der zuvor beschriebene und in Figur 1 dargestellte Stoßdämpfer mit Ausnahme der Konstruktion der Drosselnadel 11, deren Querschnitt nicht wie bei der ersten Ausführungsform hydraulisch, sondern auf mechanische Weise verstellt werden kann. Hierzu weist die Drosselnadel 11 an ihrer Außenfläche zwei um 180° zueinander versetzte Ausnehmungen 19 auf, die zur Drosselnadelspitze hin offen sind und sich in Längsrichtung der Drosselnadel 11 erstrecken. In die Ausnehmungen 19 sind längliche Einsatzelemente 20 eingesetzt, die an ihrem gehäusebodenseitigen Ende an der Drosselnadel 11 fixiert sind. Die Einsatzelemente 20 und die Drosselnadelwandung bilden eine axiale Durchgangsbohrung 21, die von einem Stellelement 22 durchgriffen wird, welches in die Drosselnadel 11 von der Gehäusebodenseite her eingeschraubt ist. Wie insbesondere in Figur 3 gut erkennbar ist, sind an den drosselnadelspitzenseitigen Endbereichen des Stellelements 22 sowie der Einsatzelemente 20 Auflaufschrägen 23, 24 vorgesehen, die bei einer zum Gehäuseboden 2a gerichteten Axialbewegung des Stellelements 22 zusammenwirken, um die Einsatzelemente 20 unter elastischer Verformung nach außen zu drücken, wodurch deren Schrägenwinkel zur Drosselnadel-achse verkleinert und damit der Querschnitt der Drosselnadel 11 vergrößert wird mit der Folge, daß der Strömungsquerschnitt des zwischen der Drosselnadel 11 und der Durchgangsbohrung 9 des Ventilelements 6 gebildeten Drosselkanals 10 abnimmt. Bei einer Axialverstellung des Stellelements in entgegengesetzter Richtung werden dann die Einsatzelemente 20 durch die elastischen Rückstellkräfte wieder nach innen bewegt.

Die Funktionsweise der erfindungsgemäßen hydraulischen Stoßdämpfer ist wie folgt:

Die Figuren 1 und 2 zeigen den Stoßdämpfer 1 in seiner Ausgangslage, in der die Kolbenstange 12 aus dem Gehäuse 2 ausgefahren ist. Wenn in dieser Ausgangslage ein abzudämpfendes Bauteil axial auf die Kolbenstange 12 auftrifft, wird diese in Richtung des Pfeils A in das Gehäuse 2 hineingedrückt, wobei sie auf das Ventilelement 6 drückt, welches mit seiner Dichtfläche auf den stirnseitig plangeschliffenen Kolben 4 drückt und somit die Durchgangsbohrungen 5 verschließt. Zusammen mit der Kolbenstange 12 bewegen sich jetzt das Ventilelement 6 und der Kolben 4 weiter in axialer Richtung, so daß das in der ersten Druckkammer 3a enthaltene Öl über den kreisringförmigen Drosselkanal 10 zwischen der Drosselnadel 11 und der Wandung der Mittelbohrung 9 des Ventilelements 6 in die Mittelbohrung gedrückt wird, sich dort entspannt und durch die in der Kolbenstange 12 vorgesehene Entspannungsnut 17 in die zweite Druckkammer 3b abfließt.

Durch die kegelige bzw. konische Form der Drosselnadel 11 verkleinert sich der Ringspalt zwischen der Drosselnadel 11 und der Mittelbohrungswandung mit fortschreitender Axialbewegung ständig. Hierdurch erhöht sich der Strömungswiderstand. Ziel dieser Konstruktion ist es, trotz abnehmender Geschwindigkeit eine konstante Verzögerung und damit stets dieselbe Gegenkraft auf das abzubremsende Werkstück auszuüben (der Staudruck bleibt trotz abnehmender Geschwindigkeit konstant).

Durch das Eindrücken der Kolbenstange verringert sich das Volumen im Inneren des Stoßdämpfers 1. Diese Verringerung muß ausgeglichen werden, da das im Stoßdämpfer 1 befindliche Öl ein inkompressibles Medium ist. Diese Verringerung wird durch Komprimierung des Absorberelements 16 ausgeglichen, indem dieses durch das in die zweite Druckkammer 3b fließende Öl zusammengedrückt wird. Das Absorberelement 16 besteht aus einem dehnbaren Material, welches geschlossenporige, komprimierbare Luftbläschen beinhaltet.

In dem Moment, in dem keine Kraft auf die Kolbenstange 12 wirkt, drückt die Schraubendruckfeder 7 das Ventilelement 6 zurück, wodurch sich zwischen dem Flansch 6a des Ventilelements 6 und dem Kolben 4 ein Spalt öffnet, so daß das Öl aus der zweiten Druckkammer 3b über die Durchgangsbohrungen 5 in die erste Druckkammer 3a zurückfließen kann. Das Absorberelement 16 vergrößert sein Volumen durch den Druck, der sich in den komprimierten Luftbläschen gebildet hat.

Um den Stoßdämpfer 1 optimal auf das abzudämpfende Bauteil abstimmen zu können, kann die Größe des Kreisringquerschnitts zwischen der konischen Drosselnadel 11 und der Mittelbohrung 9 erfindungsgemäß verändert werden. Durch Verkleinern des Querschnitts wird eine größere Kraft benötigt, um das Öl von der ersten Druckkammer 3a in die zweite Druckkammer 3b zu drücken, d. h. der Stoßdämpfer 1 wird 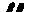 härter". Durch Vergrößern des Querschnitts verhält sich der Stoßdämpfer 1 umgekehrt.

Bei der in Figur 1 dargestellten Ausführungsform erfolgt die Einstellung des Drosselnadelquerschnitts, wie bereits erläutert, indem der Hydraulikdruck in dem Innenraum 11a durch Einschrauben des Stellorgans 18 erhöht bzw. durch Herausdrehen verkleinert wird.

In entsprechender Weise wird bei der in Figur 2 dargestellten Ausführungsform der Querschnitt verändert, indem das Stellelement 22, welches in die Drosselnadel 11 eingeschraubt ist, durch Verdrehen axial verstellt wird. Bei einer Axialbewegung zur Gehäusebodenseite hin wirken die an den Einsatzelementen 20 und dem Stellelement 22 gesehenen Auflaufschrägen 23, 24 zusammen, um die Einsatzelemente 20 im Bereich ihrer freien Enden nach außen zu drücken, wodurch sich der Querschnitt der Drosselnadel vergrößert. Bei einer in das Gehäuse 2 gerichteten Axialbewegung des Stellelements werden dann die Einsatzelemente 20 durch die elastischen Rückstellkräfte wieder nach innen gedruckt, wodurch sich der Querschnitt der Drosselnadel 11 verringert.

Das Verdrehen des Stellorgans 18 der ersten Ausführungsform und des Stellelements 22 der zweiten Ausführungsform kann manuell mit Hilfe eines Innensechskantschlüssels erfolgen. Alternativ kann auch ein Stellantrieb vorgesehen sein, um das Stellorgan 18 bzw. das Stellelement 22 motorisch zu betätigen. Eine solche motorische Betätigung bietet die Möglichkeit, den Drosselnadelquerschnitt über einen Regelkreis automatisch einzustellen, indem die Stellung des Stellorgans 18 bzw. des Stellelements 22 in Abhängigkeit von einer gewünschten Regelgröße verstellt wird.

Da die Viskosität des Öls und damit auch die Härte des Stoßdämpfers 1 von der Temperatur abhängt, kann beispielsweise der Drosselnadelquerschnitt in Abhängigkeit von der Temperatur des Hydraulikmittels, die beispielsweise über ein Thermoelement erfaßt werden kann, eingestellt werden. Alternativ oder zusätzlich besteht die Möglichkeit, einer Regelung in Abhängigkeit von der Geschwindigkeit des Kolbens 4.

## Patentansprüche

1. Hydraulischer Stoßdämpfer mit einem Gehäuse (2), das einen mit Hydraulikmittel gefüllten Druckraum (3) bildet, und einem Kolben (4), der im Druckraum (3) verschiebbar geführt ist und über eine aus dem Gehäuse (2) ragende Kolbenstange (12) betätigbar ist und den Druckraum (3) axial in zwei Druckkammern (3a, 3b) unterteilt, wobei zwischen den Druckkammern (3a, 3b) ein Drosselkanal (10) ausgebildet ist, in den von der Gehäusebodenseite her eine Drosselnadel (11) mit einem in Richtung des Gehäusebodens (2a) zunehmenden Querschnitt hineinragt, **dadurch gekennzeichnet**, daß zur Einstellung des Strömungsquerschnitts im Drosselkanal (10) die Außenkontur der Drosselnadel (11) veränderbar ist.

2. Hydraulischer Stoßdämpfer nach Anspruch 1, **dadurch gekennzeichnet**, daß die Drosselnadel (11) als geschlossener Hohlkörper ausgebildet ist und in dem Innenraum (11a) der Drosselnadel (11) unter Aufweitung der Drosselnadel (11) ein Hydraulikdruck aufgebaut werden kann.

3. Hydraulischer Stoßdämpfer nach Anspruch 2, **dadurch gekennzeichnet**, daß der mit einem Hydraulikmittel gefüllte Innenraum (11a) der Drosselnadel (11) durch ein in die Drosselnadel (11) eingeschraubtes kolbenartiges Stellorgan (18) verschlossen ist und der Hydraulikdruck im Innenraum (11a) eingestellt werden kann, indem das Stellorgan (18) unter Verkleinerung bzw. Vergrößerung des Innenraums (11a) in die Drosselnadel (11) weiter eingeschraubt oder aus dieser herausgedreht wird.

4. Hydraulischer Stoßdämpfer nach Anspruch 2 oder 3, **dadurch gekennzeichnet**, daß die Wandstärke der Drosselnadel (11) vom kleineren zum größeren Durchmesser hin insbesondere proportional zunimmt.

5. Hydraulischer Stoßdämpfer nach einem der Ansprüche 2 bis 4, **dadurch gekennzeichnet**, daß ein Regelkreis vorgesehen ist, um den Druck im Innenraum (11a) der Drosselnadel (11) in Abhängigkeit von einer Regelgröße zu verstellen.

6. Hydraulischer Stoßdämpfer nach Anspruch 5, **dadurch gekennzeichnet**, daß der Regelkreis den Innendruck in Abhängigkeit von der Geschwindigkeit des Kolbens (4) einstellt.

7. Hydraulischer Stoßdämpfer nach Anspruch 5 oder 6, **dadurch gekennzeichnet**, daß der Regelkreis den Druck im Drosselnadelinnenraum (11a) in Abhängigkeit von der Temperatur des im Druckraum (3) enthaltenen Hydraulikmittels einstellt.

8. Hydraulischer Stoßdämpfer nach einem der Ansprüche 4 bis 7 und Anspruch 3, **dadurch gekennzeichnet**, daß ein Stellantrieb vorgesehen ist, um das kolbenartige Stellorgan (18) motorisch zu betätigen und der Regelkreis mit dem Stellantrieb gekoppelt ist.

9. Hydraulischer Stoßdämpfer nach Anspruch 1, **dadurch gekennzeichnet**, daß die Drosselnadel (11) an ihrer Außenfläche Ausnehmungen (19) aufweist, die zur Drosselnadelspitze hin offen sind und sich in Längsrichtung der Drosselnadel (11) erstrecken, und in die Ausnehmungen (19) längliche Einsatzelemente (20) eingesetzt sind, die an ihrem gehäusebodenseitigen Ende an der Drosselnadel (11) fixiert und durch eine Stelleinrichtung zumindest im Bereich ihres freien Endes in den Ausnehmungen (19) etwa radial bewegbar sind, um den Winkel zur Drosselnadelachse und damit den Querschnitt der Drosselnadel (11) zu verändern

10. Hydraulischer Stoßdämpfer nach Anspruch 9, **dadurch gekennzeichnet**, daß die Ausnehmungen (19) bzw. die Einsatzelemente (20) gleichmäßig verteilt entlang des Umfangs der Drosselnadel (11) vorgesehen sind.

11. Hydraulischer Stoßdämpfer nach Anspruch 9 oder 10, **dadurch gekennzeichnet**, daß die Drosselnadel (11) eine axiale Durchgangsbohrung aufweist, die von einem Stellelement (22) der Stelleinrichtung durchgriffen wird, welches in der Durchgangsbohrung axial bewegbar gehalten ist, wobei das Stellelement (22) und/oder die Einsatzelemente (20) an ihren drosselnadelspitzenseitigen Endbereichen Auflaufschrägen (23, 24) aufweisen, um die Einsatzelemente (20) bei einer Axialbewegung des Stellelements (22) in einer Richtung nach außen zu drücken.

12. Hydraulischer Stoßdämpfer nach Anspruch 11, **dadurch gekennzeichnet**, daß die Auflaufschräge (23, 24) am Stellelement und/oder den Einsatzelementen (20) so ausgebildet sind, daß die Einsatzelemente (20) auseinandergedrückt werden, wenn das Stellelement (22) zur Gehäusebodenseite axial bewegt wird.

13. Hydraulischer Stoßdämpfer nach Anspruch 11 oder 12, **dadurch gekennzeichnet**, daß das Stellelement (22) in den Gehäuseboden (2) eingeschraubt ist und durch eine Drehbewegung axial verstellbar ist.

14. Hydraulischer Stoßdämpfer nach einem der Ansprüche 8 bis 13, **dadurch gekennzeichnet**, daß ein Stellantrieb vorgesehen ist, um das Stellelement (22) motorisch zu betätigen.

15. Hydraulischer Stoßdämpfer nach Anspruch 14, **dadurch gekennzeichnet**, daß der Stellantrieb mit einem Regelkreis gekoppelt ist, um das Stellelement (22) in Abhängigkeit von einer Regelgröße zu verstellen.

16. Hydraulischer Stoßdämpfer nach Anspruch 15, **dadurch gekennzeichnet**, daß der Regelkreis die Axialposition Stellung des Stellelements (22) und damit die Außenkontur der Drosselnadel (11) in Abhängigkeit von der Geschwindigkeit des Kolbens (4) einstellt.

17. Hydraulischer Stoßdämpfer nach Anspruch 15 oder 16, **dadurch gekennzeichnet,** daß der Regelkreis die Axialposition des Stellelements und damit die Außenkontur der Drosselnadel (11) in Abhängigkeit von der Temperatur des im Druckraum (3) enthaltenen Hydraulikmittels einstellt.

18. Hydraulischer Stoßdämpfer nach einem der Ansprüche 8 bis 17, **dadurch gekennzeichnet**, daß die Einsatzelemente (20) an ihrem gehäusebodenseitigen Ende an der Drosselnadel (11) fest gehalten sind und durch die Stelleinrichtung im Bereich der freien Enden unter elastischer Verformung aufgeweitet werden.
